# EUROPÄISCHE PATENTSCHRIFT

(11) **EP 3 543 593 B1**
(45) Veröffentlichungstag und Bekanntmachung des Hinweises auf die Patenterteilung: **04.05.2022**
(21) Anmeldenummer: 18163633.3
(22) Anmeldetag: 23.03.2018
(51) Int. Cl.: F21S 41/143, F21S 41/147, F21S 41/255, F21S 41/26, F21S 41/265, F21S 41/20, F21S 41/32, F21S 41/29, F21S 41/663, F21S 41/16, F21S 41/657, F21S 41/675

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(43) Veröffentlichungstag der Anmeldung: 25.09.2019
(73) Patentinhaber: ZKW Group GmbH, 3250 Wieselburg (AT)
(72) Erfinder: Reinprecht, Markus, 3384 Pielachhäuser (AT); Pürstinger, Josef, 4540 Bad Hall (AT)
(74) Vertreter: Patentanwaltskanzlei Matschnig & Forsthuber OG

(56) Entgegenhaltungen:
- EP-A1- 3 081 852
- EP-A1- 3 168 526
- EP-A2- 2 682 671
- WO-A1-2013/075157
- WO-A1-2013/099144
- WO-A1-2017/143371
- DE-A1-102008 003 006
- DE-A1-102014 225 246
- DE-A1-102016 201 977
- DE-A1-102016 218 058

## Beschreibung

Die Erfindung betrifft eine Beleuchtungsvorrichtung für einen Kraftfahrzeugscheinwerfer, welche Beleuchtungsvorrichtung die Merkmale des Oberbegriffs von Anspruch 1 umfasst. Derartige Beleuchtungsvorrichtungen sind aus EP 3 168 526 A1, DE 10 2014 225246 A1, DE 10 2016 218058 A1, EP 3 081 852 A1 und EP 2 682 671 A2 bekannt.

Ferner betrifft die Erfindung einen Kraftfahrzeugscheinwerfer, umfassend zumindest eine erfindungsgemäße Beleuchtungsvorrichtung.

Bei der Entwicklung der gegenwärtigen Scheinwerfersysteme steht immer mehr der Wunsch im Vordergrund, ein möglichst hochaufgelöstes Lichtbild auf die Fahrbahn projizieren zu können, welches schnell geändert und den jeweiligen Verkehrs-, Straßen- und Lichtbedingungen angepasst werden kann.

Der Begriff "Fahrbahn" wird hier zur vereinfachten Darstellung verwendet, denn selbstverständlich hängt es von den örtlichen Gegebenheiten ab, ob sich ein Lichtbild tatsächlich auf der Fahrbahn befindet oder sich darüber hinaus erstreckt, beispielsweise auf den Fahrbahnrand.

Prinzipiell wird das Lichtbild anhand einer Projektion auf eine vertikale Fläche entsprechend der einschlägigen Normen, die sich auf die KFZ-Beleuchtungstechnik beziehen, beschrieben, wobei eine variabel ansteuerbare Reflektorfläche aus einer Mehrzahl von Mikrospiegeln gebildet ist und von einem ersten Leuchtmittel emittierende Lichtstrahlen in eine Abstrahlrichtung des Scheinwerfers reflektiert.

Dabei sind beliebige Lichtfunktionen mit unterschiedlichen Lichtverteilungen realisierbar, wie beispielsweise eine Abblendlicht-Lichtverteilung, eine Abbiegelicht-Lichtverteilung, eine Stadtlicht-Lichtverteilung, eine Autobahnlicht-Lichtverteilung, eine Kurvenlicht-Lichtverteilung, eine Fernlicht-Lichtverteilung oder die Abbildung von blendfreiem Fernlicht. Weiters können auch Symbolprojektionen erfolgen, wie zum Beispiel Gefahrensymbole, Navigationspfeile, Herstellerlogos oder Ähnliches.

Für die Mikrospiegelanordnung kommt vorzugsweise die sogenannte "Digital Light Processing"-Projektionstechnik - kurz DLP genannt - zum Einsatz, bei der Bilder dadurch erzeugt werden, indem ein digitales Bild auf einen Lichtstrahl aufmoduliert wird. Dabei wird durch eine rechteckige Anordnung von beweglichen Mikrospiegeln, auch als Pixel bezeichnet, der Lichtstrahl in Teilbereiche zerlegt und anschließend pixelweise entweder in den Projektionsweg hinein oder aus dem Projektionsweg hinaus reflektiert bzw. umgelenkt.

Basis für diese Technik bildet vorzugsweise ein optoelektronisches Bauteil, das die rechteckige Anordnung in Form einer Matrix von Mikrospiegeln und deren Ansteuerungstechnik enthält, beispielsweise ein "Digital Micromirror Device" - kurz DMD genannt.

Bei einem DMD-Mikrosystem handelt es sich um einen Flächenlichtmodulator (Spatial Light Modulator, SLM), der aus matrixförmig angeordneten Mikrospiegelaktoren, d.h. verkippbaren bzw. verschwenkbaren spiegelnden Flächen besteht, beispielsweise mit einer Kantenlänge von etwa 7 µm. Die Spiegelflächen sind derart konstruiert, dass sie durch die Einwirkung elektrostatischer Felder beweglich sind.

Jeder Mikrospiegel ist im Winkel einzeln verstellbar und weist in der Regel zwei stabile Endzustände auf, zwischen denen beispielsweise innerhalb einer Sekunde bis zu 5000 Mal gewechselt werden kann.

Die Anzahl der Mikrospiegel entspricht der Auflösung des projizierten Bildes, wobei ein Pixel durch ein oder mehrere Mikrospiegel dargestellt werden kann. Mittlerweile sind DMD-Chips mit hohen Auflösungen im Megapixel-Bereich erhältlich.

Bei derzeit eingesetzten Kraftfahrzeugscheinwerfern kann die erzeugte Lichtverteilung, beispielsweise für ein blendfreies Fernlicht, derart dynamisch gesteuert werden, dass entgegenkommende Fahrzeuge detektiert werden und die beispielsweise durch eine Matrix aus LED-Lichtquellen erzeugte Lichtverteilung in Richtung des entgegenkommenden Fahrzeuges abgedunkelt wird.

Generell besteht im Bereich hochauflösender Lichtsysteme, insbesondere im Bereich der DMD-Technologie, das Problem, dass aufgrund von Beschränkungen durch die Lichtquelle, die für die Beleuchtung des DMD verwendet werden kann, keine vollfunktionale Lichtfunktion zu erwarten ist. Insbesondere ein vollfunktionales Fernlicht mit einem hohen Maximum (größer als 100 lx) und einer Breite von +/- 20° (gemessen nach einem ECE-Messschirm) kann nicht erzielt werden. Die durch ein DMD bzw. DLP-Modul erzeugbare Fernlichtverteilung ist relativ schmal mit maximal zu erwartenden Breiten von +/-10°.

Aus diesem Grund müssen weitere Zusatzmodule hinzugefügt werden, welche die volle Breite des Fernlichts bzw. der Fernlichtverteilung erzeugen, wobei diese Zusatzmodule typischerweise irgendwo im Scheinwerfer platziert werden müssen und bezüglich des Designs und des weggenommenen Bauraums im Kraftfahrzeugscheinwerfer unerwünscht sind.

Es ist eine Aufgabe der Erfindung eine verbesserte Beleuchtungsvorrichtung bereitzustellen.

Diese Aufgabe wird mit den Merkmalen von Anspruch 1 gelöst.

Durch das zusätzliche Leuchtmittel, welches eine zweite Teil-Lichtverteilung erzeugt, wird die Gesamt-Lichtverteilung der Beleuchtungsvorrichtung verbreitert.

Erfidungsgemäß trifft das von der Umlenkeinrichtung erzeugbare Abstrahllichtbündel nicht auf die zweite Projektionsoptik des zweiten Leuchtmittels.

Die Teil-Lichtverteilungen können auch als Lichtsegmente betrachtet werden, wobei die jeweils aktivierten Teil-Lichtverteilungen bzw. Lichtsegmente die Gesamt-Lichtverteilung bzw. Gesamt-Lichtverteilungen bilden.

So kann beispielsweise vorgesehen sein, dass zur Erzeugung einer Abblendlichtverteilung nur die erste Teil-Lichtverteilung, welche durch die Umlenkeinrichtung erzeugbar ist, benötigt wird.

Es kann beispielsweise auch vorgesehen sein, dass zur Erzeugung einer Fernlichtverteilung alle Teil-Lichtverteilungen benötigt werden und aktiviert sind, wobei die Teil-Lichtverteilungen bzw. Lichtsegmente nebeneinander vor die Beleuchtungsvorrichtung projizierbar sind.

Unter "nebeneinander" ist zu verstehen, dass die Teil-Lichtverteilungen unmittelbar nebeneinander, d.h. ohne Abstand zueinander vor die Beleuchtungsvorrichtung projizierbar sind und sich im Wesentlichen nicht überlappen. Es kann unter diesem Begriff auch verstanden werden, dass sich die Teil-Lichtverteilungen zumindest bereichsweise überlappen.

Erfidungsgemäß ist vorgesehen, dass die Teil-Lichtverteilungen horizontal nebeneinander vor die Beleuchtungsvorrichtung projizierbar sind, wobei der Begriff "horizontal" in einem eingebauten Zustand der Beleuchtungsvorrichtung in einem Kraftfahrzeug bezieht bzw. auf einen ECE-Messschirm.

Es kann vorgesehen sein, dass die Teil-Lichtverteilungen wiederum in mehrere Lichtsegmente unterteilbar sind, und deren Breite und Helligkeit separat veränderbar ist.

Es sei angemerkt, dass mit dem Begriff "vor der Beleuchtungsvorrichtung projizierbar" ein Projizieren in Fahrtrichtung eines Kraftfahrzeuges, in dem die Beleuchtungsvorrichtung verbaut ist, gemeint ist.

Der Begriff "Fahrtrichtung" bezeichnet in diesem Kontext die Richtung, in der sich ein angetriebenes Kraftfahrzeug wie konstruktiv vorgesehen bewegt. Ein technisch mögliches Rückwärtsfahren wird in diesem Zusammenhang nicht als Fahrtrichtung definiert.

Erfidungsgemäß ist vorgesehen, dass die Beleuchtungsvorrichtung ein drittes Leuchtmittel und zumindest eine dem dritten Leuchtmittel zugeordnete dritte Projektionsoptik umfasst, welche dritte Projektionsoptik eingerichtet ist, die von dem dritten Leuchtmittel emittierbaren Lichtstrahlen als Teil-Lichtverteilung vor die Beleuchtungsvorrichtung abzubilden, wobei diese Teil-Lichtverteilung zur Gesamt-Lichtverteilung der Beleuchtungsvorrichtung beiträgt.

Erfidungsgemäß ist im Strahlengang des zweiten und/oder dritten Leuchtmittels eine Vorsatzoptik der entsprechenden Projektionsoptik vorgeschaltet.

Erfidungsgemäß ist die Vorsatzoptik als Kollimator ausgebildet.

Es kann vorgesehen sein, dass die Projektionsoptiken stoffschlüssig miteinander und einstückig ausgebildet sind.

In einer zweckmäßigen Ausgestaltung kann vorgesehen sein, dass die Vorsatzoptik des ersten und/oder zweiten Leuchtmittels mit der entsprechenden Projektionsoptik stoffschlüssig und einstückig ausgebildet ist.

Erfidungsgemäß ist die von dem zweiten und/oder dritten Leuchtmittel erzeugbare Teil-Lichtverteilung horizontal neben der ersten Teil-Lichtverteilung angeordnet, d.h. dass die von dem zweiten und/oder dritten Leuchtmittel erzeugbare Teil-Lichtverteilung eine horizontale Verbreiterung der Gesamt-Lichtverteilung der Beleuchtungsvorrichtung bewirkt.

Dabei können die zweite und/oder dritte Teil-Lichtverteilung unmittelbar an der ersten Teil-Lichtverteilung angrenzen, sodass kein Abstand zwischen den Teil-Lichtverteilungen vorhanden ist.

Es kann auch vorgesehen sein, dass sich die zweite und/oder dritte Teil-Lichtverteilung mit der ersten Teil-Lichtverteilung bereichsweise überlappen.

Ferner kann vorgesehen sein, dass die Gesamt-Lichtverteilung eine Abblendlichtverteilung und/oder eine Fernlichtverteilung ist.

Es ist günstig, wenn die Umlenkeinrichtung als digitales Mikrospiegelarray mit einer Vielzahl von arrayartig nebeneinander angeordneten, einzeln oder gruppenweise ansteuerbaren Mikrospiegeln ausgebildet ist.

Jeder Mikrospiegel lässt sich in seinem Winkel einzeln verstellen und besitzt in der Regel zwei stabile Endzustände, zwischen denen er verkippt werden kann.

Durch gezieltes Bewegen von einzelnen oder einer Gruppe von ausgewählten Umlenkelementen kann die Form der Abstrahllichtverteilung der Beleuchtungsvorrichtung aber auch die Lichtstärkeverteilung innerhalb der Abstrahllichtverteilung variiert werden. Die Abstrahllichtverteilung ist somit sowohl hinsichtlich ihrer Form (Ausdehnung und/oder Erstreckung) als auch hinsichtlich ihrer Helligkeitsverteilung dynamisch veränderbar. Die Ansteuerung der Umlenkelemente, und damit die Variation der Abstrahllichtverteilung, kann in Abhängigkeit von Betriebsparametern des Kraftfahrzeugs (z.B. FahrzeugGeschwindigkeit, Beladung, Lenkwinkel, Querbeschleunigung, etc.) erfolgen. Bei der Ansteuerung der Umlenkelemente können auch Umgebungsparameter des Fahrzeugs (z.B. Außentemperatur, Niederschlag, detektierte andere Verkehrsteilnehmer im Umfeld des Fahrzeugs, etc.) berücksichtigt werden.

Durch ein gezieltes Ansteuern der Umlenkelemente kann die Abstrahllichtverteilung beispielsweise zwischen Fernlicht und Abblendlicht umgeschaltet werden. Außerdem kann z.B. in dem Bereich, in dem sich ein entgegenkommendes oder vorausfahrendes Fahrzeug oder ein anderer Verkehrsteilnehmer befindet, die Lichtstärke in der Abstrahllichtverteilung gezielt verringert, vorzugsweise auf null gesetzt werden (sog. Teilfernlichtfunktion). Ein Blenden der anderen Verkehrsteilnehmer kann somit wirksam verringert werden. Dementsprechend wäre es auch denkbar, dass in dem Bereich, in dem vor dem Fahrzeug ein Objekt detektiert worden ist, die Lichtstärke in der Abstrahllichtverteilung (horizontales Verschwenken) oder einer Leuchtweitenregulierung (vertikales Verschwenken) angesteuert wird, um die Ausrichtung des Abstrahllichtbündels bzw. der resultierenden Abstrahllichtverteilung horizontal und/oder vertikal bzw. die Lichtstärkeverteilung innerhalb der Abstrahllichtverteilung zu variieren.

Es kann vorgesehen sein, dass das erste Leuchtmittel als zumindest eine Leuchtdiode oder als zumindest eine Laserdiode mit einem Lichtkonversionselement ausgebildet ist.

Ferner kann vorgesehen sein, dass das zweite und/oder dritte Leuchtmittel als zumindest eine Leuchtdiode oder als zumindest eine Laserdiode mit einem Lichtkonversionselement ausgebildet ist.

Es kann auch vorgesehen sein, dass für das erste, zweite und/oder dritte Leuchtmittel mehrere Leuchtdioden vorgesehen sind, wobei jede Leuchtdiode unabhängig von den anderen Leuchtdioden eines Leuchtmittels ein- und ausgeschaltet werden kann, und vorzugsweise, wenn es sich um dimmbare Leuchtdioden handelt, auch unabhängig von den anderen Leuchtdioden des Leuchtmittels gedimmt werden kann.

Lasereinrichtungen strahlen in der Regel kohärentes, monochromatisches Licht bzw. Licht in einem engen Wellenlängenbereich ab, da aber bei einem Kraftfahrzeugscheinwerfer im Allgemeinen für das abgestrahlte Licht weißes Mischlicht bevorzugt bzw. gesetzlich vorgeschrieben ist, sind in Abstrahlrichtung der Lasereinrichtung sogenannte Lichtkonversionselemente zur Umwandlung von im Wesentlichen monochromatischem Licht in weißes bzw. polychromatisches Licht angeordnet, wobei unter "weißes Licht" Licht einer solchen Spektralzusammensetzung verstanden wird, welches beim Menschen den Farbeindruck "weiß" hervorruft. Dieses Lichtkonversionselement ist zum Beispiel in Form eines oder mehrerer Photolumineszenzkonverter bzw. Photolumineszenzelemente ausgebildet, wobei einfallende Laserstrahlen der Lasereinrichtung auf das in der Regel Photolumineszenzfarbstoff aufweisende Lichtkonversionselement auftreffen und diesen Photolumineszenzfarbstoff zur Photolumineszenz anregen, und dabei Licht in einer dem Licht der einstrahlenden Lasereinrichtung verschiedenen Wellenlänge bzw. Wellenlängenbereiche abgibt. Die Lichtabgabe des Lichtkonversionselements weist dabei im Wesentlichen Charakteristiken eines Lambert'schen Strahlers auf.

Bei Lichtkonversionselementen wird zwischen reflektiven und transmissiven Konversionselementen unterschieden.

Die Begriffe "reflektiv" und "transmissiv" beziehen sich hierbei auf den Blauanteil des konvertierten weißen Lichts. Bei einem transmissiven Aufbau ist die Hauptausbreitungsrichtung des Blaulichtanteils nach dem Durchtritt durch das Konvertervolumen bzw. Konversionselements im Wesentlichen gleichgerichtet zur Ausbreitungsrichtung des Ausgangslaserstrahls. Bei einem reflektiven Aufbau wird der Laserstrahl an einer dem Konversionselement zurechenbaren Grenzfläche reflektiert bzw. umgelenkt, sodass der Blaulichtanteil eine andere Ausbreitungsrichtung aufweist als der Laserstrahl, welcher in der Regel als blauer Laserstrahl ausgeführt ist.

Es kann vorgesehen sein, dass die erste und die zweite Teil-Lichtverteilung unmittelbar nebeneinander oder bereichsweise überlappend vor die Beleuchtungsvorrichtung projizierbar sind.

Ferner kann vorgesehen sein, dass die erste und dritte Teil-Lichtverteilung unmittelbar nebeneinander oder bereichsweise überlappend vor die Beleuchtungsvorrichtung projizierbar sind.

Es kann auch vorgesehen sein, dass die Beleuchtungsvorrichtung als Lichtmodul für einen Kraftfahrzeugscheinwerfer oder als Kraftfahrzeugscheinwerfer ausgebildet ist.

Nachfolgend wird die Erfindung anhand von beispielhaften Zeichnungen näher erläutert. Hierbei zeigt
Fig. 1 zeigt eine beispielhafte Beleuchtungsvorrichtung mit einer Umlenkeinrichtung, die mittels einem der Umlenkeinrichtung zugeordneten ersten Leuchtmittel eine erste Teil-Lichtverteilung erzeugt, wobei die Beleuchtungsvorrichtung ein zweites und ein drittes Leuchtmittel zur Erzeugung einer zweiten und dritten Teil-Lichtverteilung aufweist,
Fig. 2 eine weitere beispielhafte Beleuchtungsvorrichtung mit einem zusätzlichen ersten Leuchtmittel,
Fig. 3 eine beispielhafte erste Teil-Lichtverteilung, und
Fig. 4 die erste Teil-Lichtverteilung aus Fig. 3, wobei eine zweite und dritte Teil-Lichtverteilung seitlich neben der ersten Teil-Lichtverteilung angeordnet sind, um eine beispielhafte Fernlichtverteilung zu erzeugen.

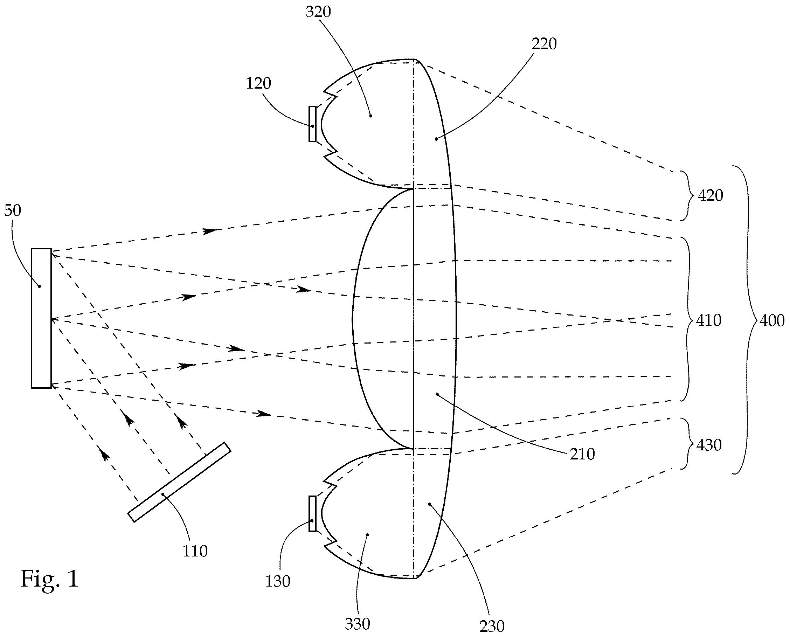

**Fig. 1** zeigt eine beispielhafte Beleuchtungsvorrichtung für einen Kraftfahrzeugscheinwerfer, welche Beleuchtungsvorrichtung ein erstes Leuchtmittel **110** zur Ausstrahlung von Lichtstrahlen, zumindest eine im Strahlengang des ersten Leuchtmittels **110** angeordnete Umlenkeinrichtung **50** mit einer Vielzahl von unabhängig voneinander ansteuerbaren und bewegbaren Umlenkelementen zum Reflektieren zumindest eines Teils der Lichtstrahlen des ersten Leuchtmittels **110** und zur Erzeugung eines Abstrahllichtbündels umfasst, wobei die Umlenkeinrichtung **50** als digitales Mikrospiegelarray mit einer Vielzahl von arrayartig nebeneinander angeordneten, einzeln oder gruppenweise ansteuerbaren Mikrospiegeln ausgebildet ist.

Ferner umfasst die gezeigte Beleuchtungsvorrichtung eine der Umlenkeinrichtung **50** zugeordnete erste Projektionsoptik **210**, welche eingerichtet ist, ein von der Umlenkeinrichtung **50** erzeugtes Abstrahllichtbündel zumindest als erste Teil-Lichtverteilung **410** einer Gesamt-Lichtverteilung **400** der Beleuchtungsvorrichtung vor die Beleuchtungsvorrichtung optisch abzubilden.

Überdies weist die Beleuchtungsvorrichtung ein zweites Leuchtmittel **120** und eine dem zweiten Leuchtmittel **120** zugeordnete zweite Projektionsoptik **220** auf, welche zweite Projektionsoptik **220** eingerichtet ist, die von dem zweiten Leuchtmittel **120** emittierbaren Lichtstrahlen als zweite Teil-Lichtverteilung **420** vor die Beleuchtungsvorrichtung optisch abzubilden, wobei diese zweite Teil-Lichtverteilung **420** zur Gesamt-Lichtverteilung **400** der Beleuchtungsvorrichtung beiträgt.

Ferner umfasst die Beleuchtungsvorrichtung ein drittes Leuchtmittel **130** und eine dem dritten Leuchtmittel **130** zugeordnete dritte Projektionsoptik **230**, welche dritte Projektionsoptik **230** eingerichtet ist, die von dem dritten Leuchtmittel **130** emittierbaren Lichtstrahlen als dritte Teil-Lichtverteilung **430** vor die Beleuchtungsvorrichtung optisch abzubilden, wobei diese dritte Teil-Lichtverteilung **430** zur Gesamt-Lichtverteilung **400** der Beleuchtungsvorrichtung beiträgt.

Weiters ist im Strahlengang bzw. in Hauptabstrahlrichtung des zweiten und dritten Leuchtmittels **120**, **130** jeweils eine Vorsatzoptik **320**, **330** der entsprechenden Projektionsoptiken **220**, **230** vorgeschalten, welche Vorsatzoptiken **320**, **330** als Kollimator ausgebildet sind, d.h. die von dem zweiten und dritten Leuchtmittel **120**, **130** emittierbaren Lichtstrahlen parallel bzw. im Wesentlichen parallel richten.

Unter "Hauptabstrahlrichtung" ist die Richtung zu verstehen, in der die Leuchtmittel infolge ihrer Richtwirkung am stärksten bzw. am meisten Licht abstrahlen.

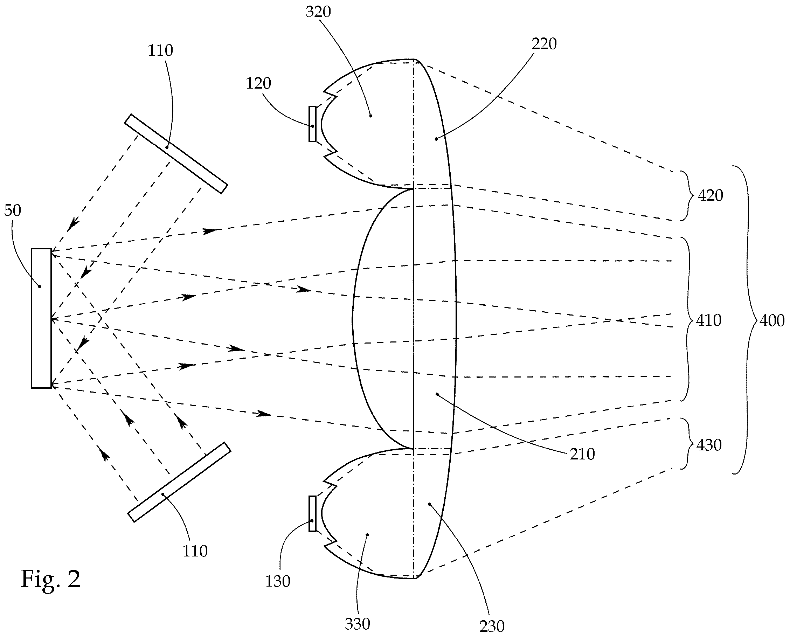

In dem in **Fig. 1** und **2** gezeigten Beispielen sind die Projektionsoptiken **210**, **220**, **230** stoffschlüssig miteinander und einstückig ausgebildet bzw. auch die Vorsatzoptiken **320**, **330** des zweiten und dritten Leuchtmittels **120**, **130** mit der entsprechenden Projektionsoptik **220**, **230** stoffschlüssig und einstückig ausgebildet.

Die Projektionsoptiken **210**, **220**, **230** und die Vorsatzoptiken **320**, **330** bilden ein einstückig und stoffschlüssiges Teil.

**Fig. 2** zeigt ein weiteres Beispiel einer Beleuchtungsvorrichtung, wobei im Unterschied zu dem Beispiel aus **Fig. 1** lediglich ein zusätzliches erstes Leuchtmittel **110** angeordnet ist.

Das erste Leuchtmittel **110** ist als zumindest eine Leuchtdiode ausgebildet. Es kann auch vorgesehen sein, dass das erste Leuchtmittel **110** als Laserdiode mit einem Lichtkonversionselement ausgebildet ist.

Das zweite und dritte Leuchtmittel **120**, **130** sind ebenfalls als zumindest eine Leuchtdiode oder als Laserdiode mit einem Lichtkonversionselement ausgebildet. Die Leuchtdioden sind unabhängig von den anderen Leuchtdioden eines Leuchtmittels ein- und ausschaltbar, und vorzugsweise, wenn es sich um dimmbare Leuchtdioden handelt, auch unabhängig von den anderen Leuchtdioden des Leuchtmittels dimmbar.

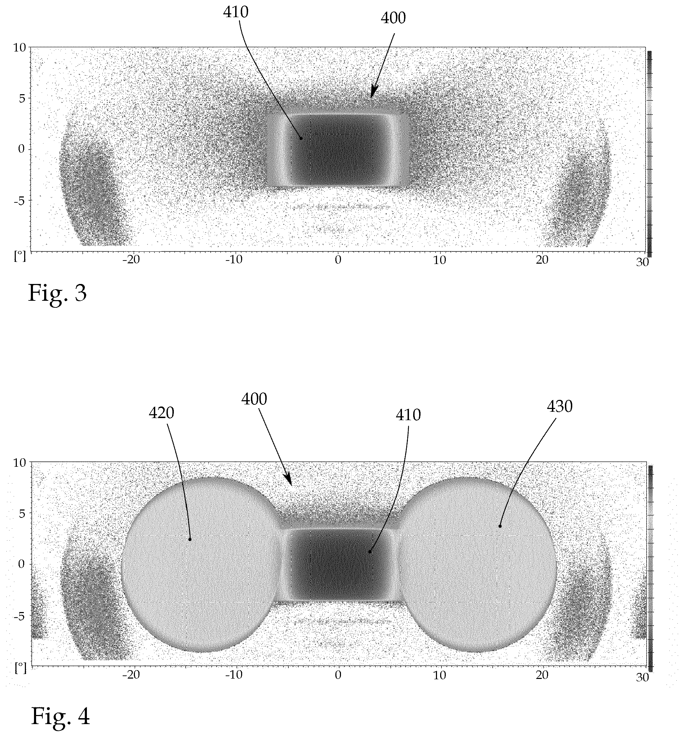

**Fig. 3** zeigt eine beispielhafte erste Teil-Lichtverteilung **410**, welche von der Umlenkeinrichtung **50** bzw. dem ersten Leuchtmittel **110** erzeugbar ist, wobei die zweite und dritte Teil-Lichtverteilung **420**, **430** nicht hinzugeschalten sind. Die erste Teil-Lichtverteilung bildet in diesem Beispiel eine Gesamt-Lichtverteilung **400**.

**Fig. 4** zeigt eine beispielhafte Gesamt-Lichtverteilung **400**, welche beispielsweise eine Fernlichtverteilung darstellt, wobei sich die gezeigte Gesamt-Lichtverteilung 400 aus der ersten, zweiten und dritten Teil-Lichtverteilung **410**, **420**, **430** zusammensetzt.

Wie in den **Figuren 3** und **4** zu sehen ist, bewirken die von dem zweiten und dritten Leuchtmittel **120**, **130** erzeugbaren Teil-Lichtverteilungen **420**, **430** eine horizontale Verbreiterung der Gesamt-Lichtverteilung **400** aus **Fig. 3**, wobei die zweite und dritte Teil-Lichtverteilung **420**, **430** unmittelbar neben der ersten Teil-Lichtverteilung **410** angeordnet sind.

**BEZUGSZEICHENLISTE**

| | |
|---|---|
| Umlenkeinrichtung... | 50 |
| Erstes Leuchtmittel... | 110 |
| Zweites Leuchtmittel... | 120 |
| Drittes Leuchtmittel... | 130 |
| Erste Projektionsoptik... | 210 |
| Zweite Projektionsoptik... | 220 |
| Dritte Projektionsoptik... | 230 |
| Vorsatzoptik... | 320, 330 |
| Gesamt-Lichtverteilung... | 400 |
| Erste Teil-Lichtverteilung... | 410 |
| Zweite Teil-Lichtverteilung... | 420 |
| Dritte Teil-Lichtverteilung... | 430 |

## Patentansprüche

1. Beleuchtungsvorrichtung für einen Kraftfahrzeugscheinwerfer, welche Beleuchtungsvorrichtung umfasst:
- zumindest ein erstes Leuchtmittel (110) zur Ausstrahlung von Lichtstrahlen,
- zumindest eine im Strahlengang des ersten Leuchtmittels (110) angeordnete Umlenkeinrichtung (50) mit einer Vielzahl von unabhängig voneinander ansteuerbaren und bewegbaren Umlenkelementen zum Umlenken zumindest eines Teils der Lichtstrahlen des ersten Leuchtmittels (110) und zur Erzeugung eines Abstrahllichtbündels,
- zumindest eine der Umlenkeinrichtung (50) zugeordnete erste Projektionsoptik (210), welche eingerichtet ist, ein von der Umlenkeinrichtung (50) erzeugtes Abstrahllichtbündel zumindest als erste Teil-Lichtverteilung (410) einer Gesamt-Lichtverteilung (400) der Beleuchtungsvorrichtung vor die Beleuchtungsvorrichtung abzubilden, wobei die Beleuchtungsvorrichtung ferner ein zweites Leuchtmittel (120) und zumindest eine dem zweiten Leuchtmittel (120) zugeordnete zweite Projektionsoptik (220) umfasst, welche zweite Projektionsoptik (220) eingerichtet ist, die von dem zweiten Leuchtmittel (120) emittierbaren Lichtstrahlen als zweite Teil-Lichtverteilung (420) vor die Beleuchtungsvorrichtung abzubilden, wobei diese zweite Teil-Lichtverteilung (420) zur Gesamt-Lichtverteilung (400) der Beleuchtungsvorrichtung beiträgt,
**dadurch gekennzeichnet, dass**
das von der Umlenkeinrichtung (50) erzeugte Abstrahllichtbündel nicht auf die zweite Projektionsoptik (220) des zweiten Leuchtmittels (120) trifft,
und wobei die Beleuchtungsvorrichtung ein drittes Leuchtmittel (130) und zumindest eine dem dritten Leuchtmittel (130) zugeordnete dritte Projektionsoptik (230) umfasst, welche dritte Projektionsoptik (230) eingerichtet ist, die von dem dritten Leuchtmittel (130) emittierbaren Lichtstrahlen als dritte Teil-Lichtverteilung (430) vor die Beleuchtungsvorrichtung abzubilden, wobei diese dritte Teil-Lichtverteilung (430) zur Gesamt-Lichtverteilung (400) der Beleuchtungsvorrichtung beiträgt, und wobei
im Strahlengang des zweiten und/oder dritten Leuchtmittels (120, 130) eine Vorsatzoptik (320, 330) der entsprechenden Projektionsoptik (220, 230) vorgeschalten ist, welche Vorsatzoptik (320, 330) als Kollimator ausgebildet ist, der eingerichtet ist, die von dem zweiten und/oder dritten Leuchtmittel (120, 130) emittierten Lichtstrahlen im Wesentlichen parallel zu richten, und wobei
die von dem zweiten und/oder dritten Leuchtmittel (120, 130) erzeugbare Teil-Lichtverteilungen horizontal neben der ersten Teil-Lichtverteilung (410) angeordnet sind.

2. Beleuchtungsvorrichtung nach Anspruch 1, **dadurch gekennzeichnet, dass** die Projektionsoptiken (210, 220, 230) stoffschlüssig miteinander und einstückig ausgebildet sind.

3. Beleuchtungsvorrichtung nach Anspruch 1 oder 2, **dadurch gekennzeichnet, dass** die Vorsatzoptik (320, 330) des zweiten und/oder dritten Leuchtmittels (120, 130) mit der entsprechenden Projektionsoptik (220, 230) stoffschlüssig und einstückig ausgebildet ist.

4. Beleuchtungsvorrichtung nach einem der Ansprüche 1 bis 3, **dadurch gekennzeichnet, dass** die Gesamt-Lichtverteilung (400) eine Abblendlichtverteilung und/oder eine Fernlichtverteilung ist.

5. Beleuchtungsvorrichtung nach einem der Ansprüche 1 bis 4, **dadurch gekennzeichnet, dass** die Umlenkeinrichtung (50) als digitales Mikrospiegelarray mit einer Vielzahl von arrayartig nebeneinander angeordneten, einzeln oder gruppenweise ansteuerbaren Mikrospiegeln ausgebildet ist.

6. Beleuchtungsvorrichtung nach einem der Ansprüche 1 bis 5, **dadurch gekennzeichnet, dass** das erste Leuchtmittel (110) als zumindest eine Leuchtdiode oder als zumindest eine Laserdiode mit einem Lichtkonversionselement ausgebildet ist oder zumindest eine solche umfasst.

7. Beleuchtungsvorrichtung nach einem der Ansprüche 1 bis 6, **dadurch gekennzeichnet, dass** das zweite und/oder dritte Leuchtmittel (120, 130) als zumindest eine Leuchtdiode oder als zumindest eine Laserdiode mit einem Lichtkonversionselement ausgebildet ist oder zumindest eine solche umfasst.

8. Beleuchtungsvorrichtung nach einem der Ansprüche 1 bis 7, **dadurch gekennzeichnet, dass** die erste und die zweite Teil-Lichtverteilung (410, 420) unmittelbar nebeneinander oder bereichsweise überlappend vor die Beleuchtungsvorrichtung projizierbar sind.

9. Beleuchtungsvorrichtung nach einem der Ansprüche 1 bis 8, **dadurch gekennzeichnet, dass** die erste und dritte Teil-Lichtverteilung (410, 430) unmittelbar nebeneinander oder bereichsweise überlappend vor die Beleuchtungsvorrichtung projizierbar sind.

10. Beleuchtungsvorrichtung nach einem der Ansprüche 1 bis 9, **dadurch gekennzeichnet, dass** die Beleuchtungsvorrichtung als Lichtmodul für einen Kraftfahrzeugscheinwerfer oder als Kraftfahrzeugscheinwerfer ausgebildet ist.

11. Kraftfahrzeugscheinwerfer mit zumindest einer Beleuchtungsvorrichtung gemäß einem der Ansprüche 1 bis 10.

## Claims

1. Lighting device for a motor vehicle headlamp, which lighting device comprises:
- at least one first illuminating means (110) for emitting light beams,
- at least one deflection device (50) arranged in the beam path of the first illuminating means (110) and having a multiplicity of deflection elements, which can be actuated and moved independently of one another, for deflecting at least part of the light beams of the first illuminating means (110) and for generating a beam of light to be emitted
- at least one first projection optical system (210) which is assigned to the deflection device (50) and is set up to image an emission light beam generated by the deflection device (50) at least as a first partial light distribution (410) of an overall light distribution (400) of the illumination device in front of the illumination device, wherein
the illumination device further comprises a second illuminating means (120) and at least one second projection optics (220) associated with the second illuminating means (120), which second projection optics (220) is set up to image the light beams emittable by the second illuminating means (120) as a second partial light distribution (420) in front of the illumination device, this second partial light distribution (420) contributing to the overall light distribution (400) of the illumination device
**characterized in that**
the radiation light beam generated by the deflection device (50) does not impinge on the second projection optics (220) of the second illuminating means (120)
and wherein
the illumination device comprises a third illuminating means (130) and at least one third projection optical system (230) assigned to the third illuminating means (130), which third projection optical system (230) is set up to image the light beams emittable by the third illuminating means (130) as a third partial light distribution (430) in front of the illumination device, this third partial light distribution (430) contributing to the overall light distribution (400) of the illumination device, and wherein
in the beam path of the second and/or third illuminating means (120, 130), an optical attachment (320, 330) is connected upstream of the corresponding projection optics (220, 230), which optical attachment (320, 330) is designed as a collimator which is set up to direct the light beams emitted by the second and/or third illuminating means (120, 130) essentially parallel, and wherein
the partial light distributions which can be generated by the second and/or third illuminating means (120, 130) are arranged horizontally next to the first partial light distribution (410).

2. Lighting device according to claim 1, **characterized in that** the projection optics (210, 220, 230) are fabric-locked to each other and integrally formed.

3. Lighting device according to claim 1 or 2, **characterized in that** the attachment optics (320, 330) of the second and/or third illuminating means (120, 130) are formed integrally with the corresponding projection optics (220, 230).

4. Lighting device according to one of claims 1 to 3, **characterized in that** the overall light distribution (400) is a low beam light distribution and/or a high beam light distribution.

5. Lighting device according to one of claims 1 to 4, **characterized in that** the deflecting device (50) is designed as a digital micromirror array with a multiplicity of micromirrors arranged array-like next to one another and controllable individually or in groups.

6. Lighting device according to any one of claims 1 to 5, **characterized in that** the first light-emitting means (110) is designed as at least one light-emitting diode or as at least one laser diode with a light-conversion element or comprises at least one such light-emitting diode.

7. Lighting device according to any one of claims 1 to 6, **characterized in that** the second and/or third light-emitting means (120, 130) is designed as at least one light-emitting diode or as at least one laser diode with a light conversion element or comprises at least one such element.

8. Lighting device according to one of claims 1 to 7, **characterized in that** the first and the second partial light distribution (410, 420) can be projected directly next to one another or overlapping in regions in front of the lighting device.

9. Lighting device according to one of claims 1 to 8, **characterized in that** the first and third partial light distributions (410, 430) can be projected directly next to one another or overlapping in regions in front of the lighting device.

10. Lighting device according to any one of claims 1 to 9, **characterized in that** the lighting device is designed as a light module for a motor vehicle headlamp or as a motor vehicle headlamp.

11. Motor vehicle headlamp having at least one lighting device according to any one of claims 1 to 10.

## Revendications

1. Dispositif d'éclairage pour un projecteur de véhicule automobile, lequel dispositif d'éclairage comprend :
- au moins un premier moyen d'éclairage (110) pour émettre des rayons lumineux,
- au moins un dispositif de déviation (50) disposé dans le trajet des rayons du premier moyen d'éclairage (110) et comportant une pluralité d'éléments de déviation pouvant être commandés et déplacés indépendamment les uns des autres pour dévier au moins une partie des rayons lumineux du premier moyen d'éclairage (110) et pour produire un faisceau lumineux de rayonnement,
- au moins une première optique de projection (210) associée au dispositif de déviation (50), qui est conçue pour représenter devant le dispositif d'éclairage un faisceau lumineux de rayonnement généré par le dispositif de déviation (50) au moins comme première répartition partielle de lumière (410) d'une répartition totale de lumière (400) du dispositif d'éclairage, dans lequel le dispositif d'éclairage comprend en outre un deuxième moyen d'éclairage (120) et au moins une deuxième optique de projection (220) associée au deuxième moyen d'éclairage (120), laquelle deuxième optique de projection (220) est conçue pour reproduire devant le dispositif d'éclairage les rayons lumineux pouvant être émis par le deuxième moyen d'éclairage (120) sous forme de deuxième répartition partielle de la lumière (420), cette deuxième répartition partielle de la lumière (420) contribuant à la répartition totale de la lumière (400) du dispositif d'éclairage,
**caractérisé en ce que**
le faisceau lumineux de rayonnement généré par le dispositif de déviation (50) ne rencontre pas la deuxième optique de projection (220) du deuxième moyen d'éclairage (120),
et dans lequel
le dispositif d'éclairage comprend un troisième moyen d'éclairage (130) et au moins une troisième optique de projection (230) associée au troisième moyen d'éclairage (130), laquelle troisième optique de projection (230) est conçue pour reproduire devant le dispositif d'éclairage les rayons lumineux pouvant être émis par le troisième moyen d'éclairage (130) sous la forme d'une troisième répartition partielle de la lumière (430), cette troisième répartition partielle de la lumière (430) contribuant à la répartition totale de la lumière (400) du dispositif d'éclairage, et où
dans le trajet des rayons du deuxième et/ou du troisième moyen d'éclairage (120, 130), une optique additionnelle (320, 330) est placée en amont de l'optique de projection correspondante (220, 230), laquelle optique additionnelle (320, 330) est conçue comme un collimateur qui est aménagé pour orienter sensiblement parallèlement les rayons lumineux émis par le deuxième et/ou le troisième moyen d'éclairage (120, 130), et où
les répartitions partielles de la lumière pouvant être générées par le deuxième et/ou le troisième moyen d'éclairage (120, 130) sont disposées horizontalement à côté de la première répartition partielle de la lumière (410).

2. Dispositif d'éclairage selon la revendication 1, **caractérisé en ce que** les optiques de projection (210, 220, 230) sont formées par liaison de matière entre elles et d'un seul tenant.

3. Dispositif d'éclairage selon la revendication 1 ou 2, **caractérisé en ce que** l'optique additionnelle (320, 330) du deuxième et/ou du troisième moyen d'éclairage (120, 130) est réalisée en liaison de matière et d'un seul tenant avec l'optique de projection correspondante (220, 230).

4. Dispositif d'éclairage selon l'une des revendications 1 à 3, **caractérisé en ce que** la répartition globale de la lumière (400) est une répartition des feux de croisement et/ou une répartition des feux de route.

5. Dispositif d'éclairage selon l'une des revendications 1 à 4, **caractérisé en ce que** le dispositif de déviation (50) est réalisé sous la forme d'un réseau numérique de micromiroirs comportant une pluralité de micromiroirs disposés côte à côte à la manière d'un réseau et pouvant être commandés individuellement ou par groupes.

6. Dispositif d'éclairage selon l'une des revendications 1 à 5, **caractérisé en ce que** le premier moyen d'éclairage (110) est conçu comme au moins une diode électroluminescente ou comme au moins une diode laser avec un élément de conversion de lumière ou comprend au moins un tel élément.

7. Dispositif d'éclairage selon l'une des revendications 1 à 6, **caractérisé en ce que** le deuxième et/ou le troisième moyen d'éclairage (120, 130) est conçu comme au moins une diode électroluminescente ou comme au moins une diode laser avec un élément de conversion de lumière ou comprend au moins une telle diode.

8. Dispositif d'éclairage selon l'une des revendications 1 à 7, **caractérisé en ce que** la première et la deuxième répartition partielle de la lumière (410, 420) peuvent être projetées devant le dispositif d'éclairage directement l'une à côté de l'autre ou en se chevauchant par zones.

9. Dispositif d'éclairage selon l'une des revendications 1 à 8, **caractérisé en ce que** la première et la troisième répartition partielle de la lumière (410, 430) peuvent être projetées directement l'une à côté de l'autre ou en se chevauchant par zones devant le dispositif d'éclairage.

10. Dispositif d'éclairage selon l'une des revendications 1 à 9, **caractérisé en ce que** le dispositif d'éclairage est conçu comme un module d'éclairage pour un projecteur de véhicule automobile ou comme un projecteur de véhicule automobile.

11. Projecteur de véhicule automobile comportant au moins un dispositif d'éclairage selon l'une des revendications 1 à 10.
